# EUROPÄISCHE PATENTSCHRIFT

(11) **EP 1 554 733 B1**
(45) Veröffentlichungstag und Bekanntmachung des Hinweises auf die Patenterteilung: **04.04.2007**
(21) Anmeldenummer: 03758024.8
(22) Anmeldetag: 20.10.2003
(51) Int. Cl.: G21C 3/42, G21C 3/62

(54) **BRENNSTOFFPELLET FÜR EINEN KERNREAKTOR UND VERFAHREN ZU SEINER HERSTELLUNG**
FUEL PELLET FOR A NUCLEAR REACTOR AND METHOD FOR THE PRODUCTION THEREOF
PASTILLE DE COMBUSTIBLE POUR REACTEUR NUCLEAIRE ET PROCEDE DE PRODUCTION DE CETTE PASTILLE

(30) Priorität: 23.10.2002 DE 10249355
(43) Veröffentlichungstag der Anmeldung: 20.07.2005
(73) Patentinhaber: AREVA NP GmbH, 91058 Erlangen (DE)
(72) Erfinder: DÖRR, Wolfgang, 91074 Herzogenaurach (DE); LANSMANN, Volker, D-91085 Weisendorf (DE)
(74) Vertreter: Mörtel & Höfner
(86) Internationale Anmeldenummer: PCT/EP2003/011594
(87) Internationale Veröffentlichungsnummer: WO 2004/038729

(56) Entgegenhaltungen:
- FR-A- 1 511 075
- US-A- 3 409 504
- US-A- 3 845 177
- US-A- 4 460 522
- US-A- 5 999 585

## Beschreibung

Die Erfindung betrifft ein Brennstoffpellet für Leichtwasserreaktoren sowie ein Verfahren zur Herstellung von Brennstoffpellets. In einem Leichtwasserreaktor, sei es ein Druckwasser- oder Siedewasserreaktor, sind die Brennstoffpellets in Hüllrohren angeordnet. Beim Reaktorbetrieb werden Spaltgase gebildet, die zunächst in den Brennstoffpellets zurückgehalten werden, später jedoch über die Außenfläche der Pellets in den Spalt zwischen Pellet und Hüllrohr diffundieren. Die Hüllrohre müssen daher dicht ausgestaltet sein, damit die Spaltgase nicht nach außen gelangen können. Im Zuge der wirtschaftlichen Optimierung von Brennelementen wird eine Steigerung der Stableistung und des Abbrandes angestrebt. Dies ist aber mit einer erhöhten Spaltgasfreisetzung verbunden, die abbrandbegrenzend werden kann. Es ist bekannt, dass das Rückhaltevermögen für Spaltgase erhöht ist, wenn die Pellets möglichst große Sinterkörner aufweisen. Um dies zu erreichen, kann den Ausgangsstoffen ein das Kornwachstum fördernder Stoff, wie bspw. Fe₂O₃, Cr₂O₃, TiO₂, Nb₂O₅, Al₂O₃ etc. zugefügt werden. Die Spaltgasfreisetzung kann weiterhin mit Pellets verringert werden, die metallische Ausscheidungen enthalten. Die metallischen Ausscheidungen weisen eine wesentlich höhere Wärmeleitfähigkeit auf als die oxidische Matrix der Pellets. Die dadurch verbesserte Wärmeableitung hat eine Verringerung des Temperaturgradienten zwischen dem Kern des Pellets und seiner Außenfläche und eine Erniedrigung der Zentraltemperatur des Brennstoffpellets zur Folge. Eine niedrigere Zentraltemperatur verringert die Beweglichkeit der Spaltgase im Brennstoff und erniedrigt damit deren Freisetzungsrate. Der insgesamt geringere Wärmeinhalt von Pellets mit gesteigerter Wärmeleitfähigkeit verbessert das Brennelementverhalten unter Störfallbedingungen (LOCA= Loss of coolant accident; RIA= reactivity- initiated accident) durch Verlängerung der Zeit bis zur Zerstörung des Brennelements. Eine niedrigere Zentraltemperatur bei sonst gleichen Brennstoffeigenschaften verringert auch den sog. Hourglas-Effekt, der sich ungünstig auf das PCI-Verhalten eines Pellets auswirkt (PCI = pellet cladding interaction).

Aus EP 0 701 734 B1 sind Brennstoffpellets bekannt, in deren oxidischer Matrix ein Metall dispergiert ist. Das Metall soll dazu dienen, bei der Kernspaltung entstehenden Sauerstoff einzufangen.

Aufgabe der Erfindung ist es, ein Brennstoffpellet mit erhöhtem Rückhaltevermögen für Spaltgase sowie ein Verfahren zu seiner Herstellung vorzuschlagen.

Diese Aufgabe wird hinsichtlich eines Brennstoffpellets gemäß Anspruch 1 dadurch gelöst, dass in der oxidischen Matrix eine bevorzugt radial ausgerichtete metallische Phase ausgeschieden bzw. vorhanden ist. Mit anderen Worten, die Ausscheidungen erstrecken sich bevorzugt in Richtung des Wärmeflusses vom Zentrum des Pellets zu dessen Außenfläche, und weniger in Axialrichtung, in der wegen des Fehlens eines Temperaturgradienten kein Wärmeaustausch stattfindet. Die Folge ist, dass bei gleichem Metallanteil bei der erfindungsgemäß vorliegenden Anisotropie der Wärmeabtransport aus dem Pellet größer ist als bei isotroper Verteilung. D.h. eine mit einem erfindungsgemäßen Pellet vergleichbare Wärmeleitfähigkeit in Radialrichtung ließe sich bei Pellets mit isotroper Verteilung der Metallausscheidungen zwar durch einen erhöhten Metallanteil erreichen. Dies hätte jedoch zur Folge, dass ein solches Pellet eine entsprechend verringerte Menge an spaltbarem Material und somit einen geringeren Abbrand hätte.

Ein bevorzugtes Brennstoffpellet enthält eine metallische Phase mit 0,1 bis 6 Gew.%, vorzugsweise mit mehr als 2 Gew.%. Prinzipiell ist die erfindungsgemäße Idee auf beliebige Kernbrennstoffe, beispielsweise auf Basis von UO_{2±x}, UPuO_{2±x}, UGdO_{2±x} oder UThO_{2±x}, anwendbar. Als metallische Phase dient vorzugsweise wenigstens ein Metall aus der Gruppe Ti, Cr, Nb, Mo, Wo und/ oder eine Legierung auf der Basis wenigstens einer dieser Metalle.

Hinsichtlich eines Verfahrens zur Herstellung eines. Brennstoffpellets wird die Erfindung nach Anspruch 7 dadurch gelöst, dass Grünlinge hergestellt werden, die neben dem oxidischen Kernbrennstoff und gegebenenfalls weiteren Zusätzen eine Vorstufe der metallischen Phase enthalten, die einen unterhalb der Sintertemperatur liegenden Schmelzpunkt aufweist und die unter Sinterbedingungen in die metallische Phase umwandelbar ist, wobei die Grünlinge so gesintert werden dass das Aufheizen auf Sintertemperatur derart schnell erfolgt, dass zumindest ein Teil der Vorstufe geschmolzen ist, bevor sie sich vollständig in die metallische Phase, die bei den herrschenden Temperaturen fest ist, umgewandelt hat. Bei einer derartigen Verfahrensweise werden Pellets erhalten, in denen sich eine metallische Phase intra und/oder intergranulär abscheidet und dabei bevorzugt radial ausgerichtet ist. Diese Anisotropie der metallischen Phase kommt wie folgt zu Stande: Das Zusammenpressen der pulver- bzw. granulatförmigen Ausgangsmischung erfolgt auf herkömmliche Weise in einer zylinderförmigen Matrize, in die ein Stempel eingedrückt wird, d.h. die Ausgangsmischung wird praktisch nur in Axialrichtung komprimiert. Dementsprechend werden darin enthaltene Hohlräume und Poren zumindest in gewissem Ausmaß in Axialrichtung gestaucht, wobei ihre ursprüngliche Ausdehnung in Radialrichtung erhalten bleibt oder sich vergrößert. Auf diese Weise hergestellte Pellets enthalten also von Haus aus Poren bzw. Hohlräume, die sich vorzugsweise in Radialrichtung strecken. Der Erfindung liegt nun die Idee zu Grunde, diese an sich schon radial ausgerichteten Hohlräume mit einer weitgehend zusammenhängenden metallischen Phase zu füllen und dadurch die Wärmeleitfähigkeit des Pellets in der genannten Richtung zu erhöhen. Die aus einem Partikel der Vorstufe hervorgegangene schmelzflüssige Phase kann quasi in Höhlräume des Pellets hineinfließen und sich mit der schmelzflüssige Phase benachbarter Vorstufenpartikel zu größeren zusammenhängenden Bereichen vereinigen. Im Gegensatz dazu wird bei dem aus EP 0 701 734 B1 bekannten Pellet eine möglichst gleichmäßige Verteilung vieler kleiner Metallpartikel mit einer möglichst großen wirksamen Oberfläche angestrebt, um die Reaktion mit dem Spaltgas Sauerstoff zu ermöglichen.

Bei einer bevorzugten Verfahrensvariante wird zumindest der Kernbrennstoff granuliert und erst nach dem Granulierschritt die Vorstufe der metallischen Phase hinzugefügt. Bei dieser Vorgehensweise lässt sich die Anisotropie der metallischen Phase in Radialrichtung weiter erhöhen. In einem Granulatkorn sind bekanntlich Partikel des Ausgangspulvers agglomeriert. Der Zusammenhalt der Pulverpartikel in einem Granulatkorn ist nun nicht so groß, dass er dem Druck beim Pressen eines Grünlings Stand halten könnte. Die Granulatkörner werden daher beim Pressvorgang zusammengedrückt und dabei abgeflacht. Dementsprechend verlaufen die Korngrenzen zwischen den Granulatkörnern nach dem Pressvorgang zu einem größeren Anteil in Radialrichtung als in Axialrichtung. In dem nun die Vorstufe der metallischen Phase nicht dem Brennstoffpulver sondern dem daraus hergestellten Granulat zugefügt wird, werden die Granulatkörner von der Vorstufe quasi umhüllt. Dementsprechend ist die Vorstufe der metallischen Phase nach dem Pressen in den überwiegend in Radialrichtung verlaufenden Korngrenzen angeordnet. Beim Schmelzen der Vorstufe während des Aufheizens bilden sich in den Korngrenzen zusammenhängende, die radiale Wärmeleitfähigkeit erhöhende metallische Bereiche.

In einer ersten Ausführungsform wird als Vorstufe ein Metalloxid verwendet, dessen Schmelzpunkt unterhalb der Sintertemperatur liegt, wobei unter reduzierenden Bedingungen gesintert und das Aufheizen so schnell vorgenommen wird, dass zumindest ein Teil des Metalloxides schmilzt bevor es zu Metall reduziert wird. Metalloxide, die diese Eigenschaften aufweisen, sind beispielsweise MoO₂ und MoO₃.

Bei einer zweiten Ausführungsform wird ebenfalls ein Metalloxid als Vorstufe verwendet, wobei jedoch zunächst bei niedrigerer Vorsintertemperatur und oxidierenden Bedingungen solange gesintert wird, bis zumindest ein Teil des Metalloxides geschmolzen ist, wobei anschließend reduzierende Bedingungen und eine höhere Temperatur, d. h. zumindest gegen Ende des Sinterns die erforderliche Sintertemperatur, angewendet werden. Dieses Verfahren ist aufgrund seiner Zweistufigkeit zwar mit einem größeren technischen Aufwand verbunden, hat aber den Vorteil, dass nicht nur ein Teil, sondern die gesamte zugesetzte Menge an Metalloxid geschmolzen werden kann, bevor die Reduktion zum Metall einsetzt. Auf diese Weise können in einem Pellet besonders große zusammenhängende und radial ausgerichtete metallische Bereiche erzeugt werden, insbesondere wenn die Zugabe der Vorstufe zum Granulat erfolgt. Als Metalloxid eignen sich auch hier MoO₂ und MoO₃. Bei Verwendung dieser Oxide ist es zweckmäßig, eine Vorsintertemperatur von 800 bis 1300 °C einzuhalten. Bei derartigen Temperaturen wird MoO₃, das einen Schmelzpunkt von 795 °C aufweist, in die schmelzflüssige Form übergeführt. MoO₂ disproportioniert beim Erhitzen in metallisches Molybdän und MoO₃. Letzteres wird bei den vorherrschenden Temperaturen verflüssigt.

Während bei den bisherigen Verfahrensvariante eine Vorstufe der metallischen Phase während des Sinterns zum Metall umgewandelt wird, wird bei einer weiteren Verfahrensvariante ein prinzipiell anderer Weg beschritten. Der Ausgangsmischung wird ein Metallpulver mit nicht sphärischen, also länglichen bzw. nadelförmigen oder plättchenförmigen Partikeln zugesetzt. Die Partikel liegen zunächst in einer regellosen Anordnung vor. Das Pressen der Mischung und die damit verbundene axiale Materialkompression bringt es mit sich, dass sich bisher mehr axial ausgerichtete Partikel radial ausrichten. Die so erhaltenen Grünlinge lassen sich auf herkömmliche Weise zu fertigen Pellets sintern.

### Beispiel 1:

| | |
|---|---|
| UO₂ | 78,85 Gew.% |
| U₃O₈ | 15,36 Gew.% |
| MoO₂ | 5,79 Gew.% |

### Beispiel 2:

| | |
|---|---|
| UO₂ | 78,28 Gew.% |
| U₃O₈ | 15,25% Gew.% |
| MoO₂ | 6,47 Gew.% |

### Beispiel 3:

| | |
|---|---|
| UO₂ | 92,2 Gew.% |
| U₃O₈ | 5, 16 Gew.% |
| MoO₂ | 2,65 Gew.% |

Zunächst wird eine homogenisierte Uranoxid-Ausgangsmischung gem. Beispiel 1, 2 oder 3 bereitgestellt. Als nächstes erfolgt die Granulatherstellung, bei der die Ausgangsmischung verdichtet und anschließend durch ein Sieb mit einer Siebweite beispielsweise von 14 mesh gedrückt wird. Es ergeben sich Granulatkörner mit einem mittleren Durchmesser von etwa 1 mm. Dem Granulat wird nun MoO₂ oder MoO₃ zugesetzt. Es ist auch denkbar, das Molybdänoxid bereits dem Brennstoffpulver beizumengen. Falls erforderlich können dieser Grundmischung vor oder nach dem Granulierschritt Presshilfsmittel und/oder Dotierungsmittel beigemengt werden. Das jeweils erhaltene Granulat wird zu Grünlingen gepresst und diese gesintert.

Das Sintern kann nun in zwei unterschiedliche Varianten erfolgen:

### Variante 1:

Die Grünlinge werden in einem Sinterofen bei Temperaturen um etwa 1600°- 1850°C unter reduzierenden Bedingungen gesintert. Das Aufheizen wird so gesteuert, dass die Schmelztemperatur von MoO₃ (795 °C) möglichst schnell erreicht wird, damit der zu Molybdän reduzierte (nicht verflüssigbare) Anteil möglichst gering bleibt. Gute Ergebnisse werden mit Aufheizraten von 10 bis 20°C /min. erhalten. Die reduzierenden Bedingungen werden durch eine H₂-haltige Atmosphäre gewährleistet. Dieser H₂-Atmosphäre können zur Einstellung eines gewünschten Sauerstoffpotentials noch weitere Gase wie CO₂, H₂O (Dampf), N₂ oder Argon einzeln oder in beliebiger Mischung zugegeben werden. Bei MoO₂ enthaltenden Grünlingen findet zunächst eine Disproportionierung in metallisches Molybdän und MoO₃ statt.

### Verfahrensvariante 2:

Hier werden die Grünlinge in einem zweistufigen Verfahren gesintert. Zunächst werden die Grünlinge bei einer vorsintertemperatur von etwa 800 bis 1300°C in einer oxidierenden Atmosphäre (beispielsweise technisches CO₂) behandelt. Da nun eine Reduktion des Molybdänoxids nicht zu befürchten ist, kann die Wärmebehandlung solange erfolgen, bis sämtliches Molybdänoxid geschmolzen ist. Dann werden reduzierende Bedingungen eingestellt. Dazu kann z.B. ein Sinterofen verwendet werden, der unterschiedliche Zonen mit jeweils unterschiedlichen Atmosphären aufweist. Je nach vorheriger Prozessführung werden nun die Grünlinge bei einer Sintertemperatur zwischen 1100°C - 1850°C zu Ende gesintert. In der reduzierenden Atmosphäre wird in der ersten Verfahrensstufe aufoxidiertes Uranoxid wieder so weit reduziert, dass sich ein stöchiometrische U/O-Verhältnis von 1/2 einstellt.

Das beigefügte Diagramm zeigt die Ergebnisse von Messungen, die an Pellets mit einer Zusammensetzung entsprechend den obigen Beispielen 1 und 2 gemacht wurden. Die in den Ausgangsmischungen enthaltene Molybdänoxidmenge von 5,8% bzw. 6,5% entspricht in den Pellets einem Gehalt von 4,4% Molybdän.

### Im Diagramm bedeuten:

### MoIV/MoVI Ausgangsmischung mit MoO₂ bzw. MoO₃

- G / P: Zugabe des Molybdänoxids zum Granulat bzw. zum Pulver
- H: Sinterung unter Wasserstoff
- HO: Sinterung unter Wasserstoff/CO₂

Dem Diagramm ist eindeutig zu entnehmen, dass sämtliche Pellets eine Wärmeleitfähigkeit aufweisen, die oberhalb der berechneten Wärmeleitfähigkeit von UO₂- Pellets mit isotrop verteilten, kugelförmigen Mo-Ausscheidungen (untere gestrichelte Kurve) liegt. Aus dem Diagramm ist ersichtlich, dass die Zugabe des Molybdänoxids zum Granulat bessere Ergebnisse liefert als eine Zugabe zum Pulver. Der Einflüss der Sinteratmosphäre auf die Wärmeleitfähigkeit ist weniger stark ausgeprägt.

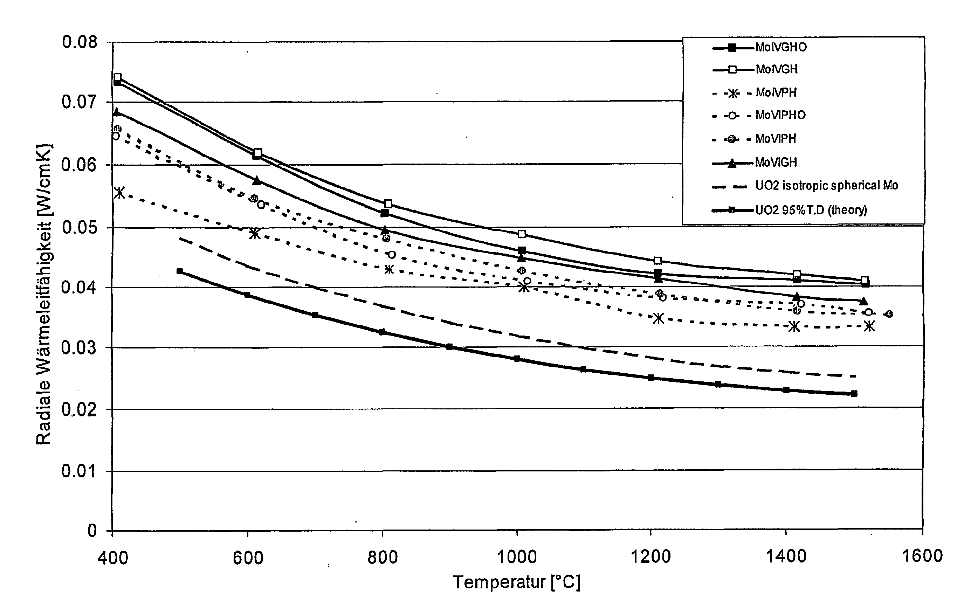

## Patentansprüche

1. Brennstoffpellet für einen Kernreaktor, mit einer zylindrischen Form, einer Matrix aus einem oxidischen Kernbrennstoff und intra- oder intergranulären Ausscheidungen einer metallischen Phase,
**gekennzeichnet durch**
eine Ausrichtung der Ausscheidungen derart, dass das Brennstoffpellet in Radialrichtung eine größere Wärmeleitfähigkeit aufweist als in Axialrichtung.

2. Brennstoffpellet nach Anspruch 1,
**dadurch gekennzeichnet,**
**dass** die Ausscheidungen überwiegend radial zur Mantelfläche des Pellets hin ausgerichtet sind.

3. Brennstoffpellet nach Anspruch 1 oder 2, **gekennzeichnet durch** einen Metallgehalt von 0,1 bis 6 Gew.%

4. Brennstoffpellet nach Anspruch 3,
**gekennzeichnet durch**
einen Metallgehalt von mehr als 2 Gew.%.

5. Brennstoffpellet nach einem der Ansprüche 1 bis 4,
**dadurch gekennzeichnet,**
**dass** als metallische Phase wenigstens ein Metall aus der Gruppe Ti, Cr, Mo und W und/ oder eine Legierung auf der Basis wenigstens eines dieser Metalle enthalten ist.

6. Brennstoffpellet nach einem der Ansprüche 1 bis 5,
**gekennzeichnet durch**,
einen Kernbrennstoff auf der Basis von UO_{2±x}, UPuO_{2±x}, UGdO_{2±x} oder UThO_{2±x}.

7. Verfahren zur Herstellung von Brennstoffpellets nach einem der Ansprüche 1 bis 6, bei dem
a) durch axiale Kompression der Ausgangsstoffe Grünlinge hergestellt werden, die neben dem oxidischen Kernbrennstoff und gegebenenfalls weiteren Zusätzen eine Vorstufe der metallischen Phase enthalten, welche einen unterhalb der Sintertemperatur liegenden Schmelzpunkt aufweist und die unter Sinterbedingungen in die metallische Phase umwandelbar ist, und
b)die Grünlinge gesintert werden, wobei das Aufheizen der Grünlinge mit einer derartigen Geschwindigkeit erfolgt, dass zumindest ein Teil der Vorstufe verflüssigt, bevor sie sich vollständig in die metallische Phase umgewandelt hat, wobei die verflüssigte Vorstufe durch die axiale Kompression gebildete bevorzugt radial ausgerichtete Poren bzw. Hohlräume der oxidischen Matrix füllt.

8. Verfahren nach Anspruch 7,
**dadurch gekennzeichnet,**
**dass** zur Herstellung der Grünlinge zumindest der Kernbrennstoff granuliert und dann die Vorstufe der metallischen Phase dem Granulat beigemengt wird.

9. Verfahren nach Anspruch 7 oder 8,
**dadurch gekennzeichnet,**
**dass** ein Metalloxid als Vorstufe verwendet wird, wobei unter reduzierenden Bedingungen gesintert und das Aufheizen so schnell vorgenommen wird, dass zumindest ein Teil des Metalloxids schmilzt, bevor es zum Metall reduziert wird.

10. Verfahren nach Anspruch 9,
**gekennzeichnet durch**
die Verwendung von MoO₂ und/oder MoO₃.

11. Verfahren nach Anspruch 10,
**dadurch gekennzeichnet,**
**dass** mit einer Geschwindigkeit von 10 bis 20 °C/min. im Temperaturbereich von 300°C bis 1100°C aufgeheizt wird.

12. Verfahren nach Anspruch 11,
**dadurch gekennzeichnet,**
**dass** das Aufheizen in einem Temperaturbereich von 400°C bis 1000°C erfolgt.

13. Verfahren zur Herstellung von Brennstoffpellets nach einem der Ansprüche 1 bis 6, bei dem
a) durch axiale Kompression der Ausgangsstoffe Grünlinge hergestellt werden, die neben dem oxidischen Kernbrennstoff und gegebenenfalls weiteren Zusätzen ein weiteres Metalloxid enthalten, und
b)die Grünlinge gesintert werden, indem zunächst bei niedrigerer Vorsintertemperatur und oxidierenden Bedingungen so lange gesintert wird, bis zumindest ein Teil des Metalloxids geschmolzen ist und durch die axiale Kompression überwiegend radial ausgerichteten Poren bzw. Hohlräume der oxidischen Matrix füllt, wobei anschließend reduzierende Bedingungen und Temperaturen zwischen 1000°C und 1850°C angewendet werden.

14. Verfahren nach Anspruch 13,
**gekennzeichnet durch**
die Verwendung von MoO₂ und/oder MoO₃.

15. Verfahren nach Anspruch 13 oder 14,
**gekennzeichnet durch**
eine Vorsintertemperatur von 800 bis 1300 °C.

16. Verfahren nach einem der Ansprüche 13 bis 15,
**dadurch gekennzeichnet,**
**dass** zur Herstellung der Grünlinge zumindest der Kernbrennstoff granuliert und dann das weitere Metalloxid dem Granulat beigemengt wird.

17. Verfahren zur Herstellung von Brennstoffpellets nach einem der Ansprüche 1 bis 6, bei dem einem oxidischen Brennstoffpulver nicht sphärische Metallpartikel und gegebenenfalls weitere Zusätze beigemengt und aus dieser Ausgangsmischung durch axiale Kompression Grünlinge gepresst und gesintert werden.

18. Verfahren nach einem der Ansprüche 6 bis 16,
**dadurch gekennzeichnet,**
**dass** zur Herstellung der Grünlinge Mischungen mit 70 bis 95 Gew.% UO₂ und 4 bis 25 Gew.% U₃O₈ verwendet werden.

19. Verfahren nach einem der Ansprüche 7 bis 18,
**dadurch gekennzeichnet,**
**dass** ein das Kornwachstum fördernder Stoff zugesetzt wird.

## Claims

1. Fuel pellet for a nuclear reactor, having a cylindrical shape, a matrix of an oxidic nuclear fuel and intragranular or intergranular precipitations of a metallic phase, **characterized by** the precipitations being oriented in such a manner that the fuel pellet has a higher thermal conductivity in the radial direction than in the axial direction.

2. Fuel pellet according to Claim 1, **characterized in that** the precipitations are predominantly oriented radially toward the lateral surface of the pellet.

3. Fuel pellet according to Claim 1 or 2, **characterized by** a metal content of 0.1 to 6% by weight.

4. Fuel pellet according to Claim 3, **characterized by** a metal content of more than 2% by weight.

5. Fuel pellet according to one of Claims 1 to 4, **characterized in that** the metallic phase which is present is at least one metal selected from the group consisting of Ti, Cr, Mo and W and/or an alloy based on at least one of these metals.

6. Fuel pellet according to one of Claims 1 to 5, **characterized by** a nuclear fuel based on UO_{2±x}, UPuO_{2±x}, UGdO_{2±x} or UThO_{2±x}.

7. Process for producing fuel pellets according to one of Claims 1 to 6, in which
a) green slugs are produced by axial compression of the starting materials, which in addition to the oxidic nuclear fuel and any further additives, contain a precursor of the metallic phase, this precursor having a melting point which is below the sintering temperature and can be converted into the metallic phase under sintering conditions, and
b) the green slugs are sintered, with the green slugs being heated at a rate which is such that at least some of the precursor is liquefied before being completely converted into the metallic phase, with the liquefied precursor filling preferentially radially oriented pores or cavities in the oxidic matrix formed as a result of the axial compression.

8. Process according to Claim 7, **characterized in that** to produce the green slugs at least the nuclear fuel is granulated, and then the precursor of the metallic phase is admixed with the granules.

9. Process according to Claim 7 or 8, **characterized in that** the precursor used is a metal oxide, with sintering being carried out under reducing conditions and the heating being carried out sufficiently quickly for at least some of the metal oxide to melt before it is reduced to form the metal.

10. Process according to Claim 9, **characterized by** the use of MoO₂ and/or MoO₃.

11. Process according to Claim 10, **characterized in that** heating is carried out at a rate of from 10 to 20°C/min in the temperature range from 300°C to 1100°C.

12. Process according to Claim 11, **characterized in that** the heating is carried out in a temperature range from 400°C to 1000°C.

13. Process for producing fuel pellets according to one of Claims 1 to 6, in which
a) green slugs are produced by axial compression of the starting materials, which in addition to the oxidic nuclear fuel and any further additives, contain a further metal oxide, and
b) the green slugs are sintered by first of all sintering at a relatively low pre-sintering temperature and under oxidizing conditions until at least some of the metal oxide has melted and fills pores or cavities in the oxidic matrix, which are predominantly radially oriented as a result of the axial compression, after which reducing conditions and temperatures of between 1000°C and 1850°C are applied.

14. Process according to Claim 13, **characterized by** the use of MoO₂ and/or MoO₃.

15. Process according to Claim 13 or 14, **characterized by** a pre-sintering temperature of from 800 to 1300°C.

16. Process according to one of Claims 13 to 15, **characterized in that** to produce the green slugs at least the nuclear fuel is granulated, and then the further metal oxide is admixed with the granules.

17. Process for producing fuel pellets according to one of Claims 1 to 6, in which nonspherical metal particles and if appropriate further additives are admixed with an oxidic fuel powder, and green slugs are pressed from this starting mixture by axial compression and sintered.

18. Process according to one of Claims 6 to 16, **characterized in that** mixtures comprising 70 to 95% by weight of UO₂ and 4 to 25% by weight of U₃O₈ are used to produce the green slugs.

19. Process according to one of Claims 7 to 18, **characterized in that** a substance which promotes grain growth is added.

## Revendications

1. Pastille de combustible pour réacteur nucléaire, ayant une forme cylindrique, une matrice en un combustible nucléaire oxydé et des dépôts intragranulaires ou intergranulaires d'une phase métallique,
**caractérisée par**
une orientation des dépôts de sorte que la pastille de combustible ait une conductibilité calorifique plus grande en direction radiale qu'en direction axiale.

2. Pastille de combustible suivant la revendication 1,
**caractérisée**
**en ce que** les dépôts sont dirigés d'une manière prépondérante radialement vers la surface latérale de la pastille.

3. Pastille de combustible suivant la revendication 1 ou 2,
**caractérisée par** une teneur en métal de 0,1 à 6 % en poids.

4. Pastille de combustible suivant la revendication 3,
**caractérisée par** une teneur en métal de plus de 2 % en poids.

5. Pastille de combustible suivant l'une des revendications 1 à 4,
**caractérisée**
**en ce qu'**il est contenu comme phase métallique au moins un métal du groupe Ti, Cr, Mo et W et/ou un alliage à base d'au moins l'un de ces métaux.

6. Pastille de combustible suivant l'une des revendications 1 à 5,
**caractérisée**
**par** un combustible nucléaire à base de UO_{2±x}, UPuO_{2±x}, UGdO_{2±x} ou UThO_{2±x}.

7. Procédé de production d'une pastille de combustible suivant l'une des revendications 1 à 6, dans lequel
a) on produit, par compression axiale des substances de départ, des comprimés crus qui contiennent, outre le combustible nucléaire oxydé et le cas échéant d'autres additifs, un précurseur de la phase métallique qui a un point de fusion inférieur à la température de frittage et qui peut être transformé en la phase métallique dans des conditions de frittage, et
b) on fritte les comprimés crus, le chauffage des comprimés crus s'effectuant à une vitesse telle qu'au moins une partie du précurseur se liquéfie avant de se transformer complètement en la phase métallique, le précurseur liquéfié remplissant les pores ou les cavités de la matrice oxydée dirigés de préférence radialement et formés par la compression axiale.

8. Procédé suivant la revendication 7,
**caractérisé**
**en ce que**, pour produire les comprimés crus, on granule au moins le combustible nucléaire et on ajoute ensuite le précurseur de la phase métallique au granulat.

9. Procédé suivant la revendication 7 ou 8,
**caractérisé**
**en ce que** l'on utilise un oxyde métallique comme précurseur, en frittant dans des conditions réductrices en effectuant le chauffage si rapidement qu'au moins une partie de l'oxyde métallique fond avant d'être réduit en le métal.

10. Procédé suivant la revendication 9,
**caractérisé**
**par** l'utilisation de MoO₂, et/ou MoO₃.

11. Procédé suivant la revendication 10,
**caractérisé**
**en ce que** l'on chauffe à une vitesse de 10 à 20° C/min. dans la plage de température de 300°C à 1100°C.

12. Procédé suivant la revendication 11,
**caractérisé**
**en ce que** l'on effectue le chauffage dans une plage de température de 400°C à 1000°C.

13. Procédé de production de pastilles de combustible suivant l'une des revendications 1 à 6, dans lequel
a) on produit, par compression axiale des substances de départ, des comprimés crus qui contiennent, outre le combustible nucléaire oxydé et le cas échéant d'autres additifs, un autre oxyde métallique, et
b) on fritte les comprimés crus en frittant d'abord à une température de pré-frittage assez basse et dans des conditions oxydantes jusqu'à ce qu'au moins une partie de l'oxyde métallique soit fondue et remplisse des pores ou des cavités de la matrice oxydée orientés d'une manière prépondérante radialement par la compression axiale, des conditions réductrices et des températures comprises entre 1000°C et 1850°C étant utilisées ensuite.

14. Procédé suivant la revendication 13,
**caractérisé**
**par** l'utilisation de MoO₂ et/ou de MoO₃.

15. Procédé suivant la revendication 13 ou 14,
**caractérisé**
**par** une température de pré-frittage de 800 à 1300°C.

16. Procédé suivant l'une des revendications 13 à 15,
**caractérisé**
**en ce que** pour la production des comprimés crus, on granule au moins la matière de combustible nucléaire et on ajoute ensuite l'autre oxyde métallique au granulat.

17. Procédé de production de pastilles de combustible, suivant l'une des revendications 1 à 6, dans lequel on ajoute à une poudre de combustible oxydée des particules métalliques non sphériques et, le cas échéant, d'autres additifs et on comprime des comprimés crus en ce mélange de départ par une compression axiale et on les fritte.

18. Procédé suivant l'une des revendications 6 à 16,
**caractérisé**
**en ce que** pour la production des comprimés crus on utilise des mélanges ayant de 70 à 95 % en poids de UO₂ et de 85 % en poids de U₃O₈.

19. Procédé suivant l'une des revendications 7 à 18,
**caractérisé**
**en ce que** l'on ajoute une substance favorisant la croissance des grains.
